Europäisches Patentamt

European Patent Office

Office européen des brevets

(11) Veröffentlichungsnummer: **0 266 802 B1**

(19)

(12) **EUROPÄISCHE PATENTSCHRIFT**

(45) Veröffentlichungstag der Patentschrift: **04.03.92**

(21) Anmeldenummer: **87116525.4**

(22) Anmeldetag: **09.11.87**

(51) Int. Cl.⁵: **B64C 11/00**, B64C 11/16, B63H 1/14, B01F 15/00, F03D 1/06

(54) **Mantelpropeller.**

(30) Priorität: **07.11.86 DE 3638060**

(43) Veröffentlichungstag der Anmeldung:
**11.05.88 Patentblatt 88/19**

(45) Bekanntmachung des Hinweises auf die
Patenterteilung:
**04.03.92 Patentblatt 92/10**

(84) Benannte Vertragsstaaten:
**AT BE CH DE FR GB IT LI NL SE**

(56) Entgegenhaltungen:
**US-A- 3 504 990**
**US-A- 4 445 817**

(73) Patentinhaber: **Moderne Luft- und Mischtechnik GmbH**
**Diekbarg 48**
**W-2000 Hamburg 65(DE)**

(72) Erfinder: **Brünig, Matthias, Prof.**
**Diekbarg 48**
**W-2000 Hamburg 65(DE)**
Erfinder: **Möller, Werner, Prof.,Dr.**
**Steendammswisch 53**
**W-2000 Hamburg 61(DE)**

(74) Vertreter: **Glaeser, Joachim, Dipl.-Ing. et al**
**Patentanwalt Königstrasse 28**
**W-2000 Hamburg 50(DE)**

**Beschreibung**

Die Erfindung bezieht sich auf einen Mantelpropeller zum Fördern von Gasen, Flüssigkeiten und dergl. und zum Antrieb von Land-, Luft- und Wasserfahrzeugen, bestehend aus mindestens zwei um eine Drehachse schraubenförmig angeordneten Förderblättern, die durch in Form eines Kegelmantelausschnittes ausgebildete Mantelflächen miteinander verbunden sind.

Ein derartiger Mantelpropeller ist bekannt (PCT/EP 85 00 057), und er wurde entwickelt, um eine Prallströmung zu erzeugen.

Der Erfindung liegt die Aufgabe zugrunde, einen Mantelpropeller der eingangs genannten Art derart zu verbessern, daß er im Vergleich zu bekannten Axialpropellern gleichen Durchmessers und bei gleicher Drehzahl eine deutlich höhere Förderleistung erbringt.

Erreicht wird dies dadurch, daß bei einem Mantelpropeller der eingangs genannten Art jedes Förderblatt von ihrer Anströmseite her mit zunehmender Steigung ausgebildet ist und daß die Mantelflächen den Bereich der größten mit dem Bereich der geringsten Steigung (Abströmbereich und Anströmbereich) benachbarter Förderblätter miteinander verbinden.

Bei einer besonders vorteilhaften Ausführungsform der Erfindung ist die Verbindung von Mantelfläche zum Förderblatt im Bereich der größten Steigung jeweils mit einem großen Krümmungsradius, vorzugsweise von mindestens einem Drittel des Radius des Förderbandes ausgebildet.

Nach einer weiteren Ausführungsform der Erfindung ist die Steigung jedes Förderblattes nahe der Drehachse größer, als in größerer Entfernung von der Drehachse.

Bei einer weiteren Ausführungsform stimmt nicht nur die Tangente an der vorderen Anströmkante mit der relativen Anströmrichtung überein, sondern auch die Seitenkanten der Förderblätter sind so ausgebildet, daß die Anströmrichtung tangential zur Seitenkante ausgerichtet ist.

Der Mantelpropeller gemäß der Erfindung kann im Umkehrbetrieb als Hydraulikmotor von Gasen, Flüssigkeiten und dergl., insbesondere als Motor, angewendet werden.

Die Erfindung wird nachstehend anhand der Zeichnung beispielsweise erläutert.

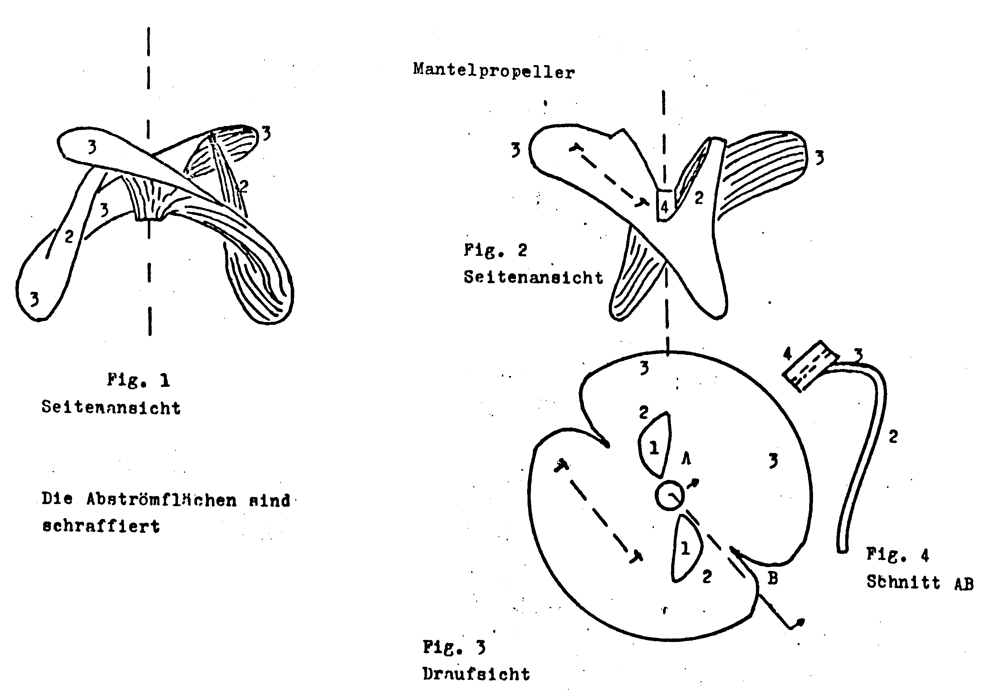

Die Figuren 1 und 2
zeigen Seitenansichten einer Ausführungsform eines Mantelpropellers gemäß der Erfindung.
Fig. 2
zeigt eine Draufsicht auf den Mantelpropeller gemäß der Erfindung.
Fig. 4
zeigt eine Schnittansicht A-B gemäß A-B der Fig. 3.

Der Mantelpropeller besteht aus mindestens zwei Förderblättern 3, die mit unterschiedlicher Flächenbreite spiralig um die Drehachse des Mantelpropellers (unterbrochene Linie in Figuren 1 und 2) angeordnet sind. Die Förderblätter 3 sind durch Mantelflächen 2 miteinander verbunden, wobei die Mantelflächen 2 und die Förderblätter 3 jeweils Löcher 1 bilden, durch welche das zu fördernde Medium fließt. Die Mantelflächen 2 sind schmale Kegelausschnittsflächen und greifen einmal an einer vorderen Anströmkante 10 jedes Förderblatts 3 an und sind zum anderen an einer Abströmkante 11 im Bereich der größten Steigung des benachbarten Förderblattes 3 befestigt (Die Abströmflächen selbst sind in den Figuren 1 und 2 schraffiert). Dadurch wird ein allseitiger Zufluß des zu fördernden Gutes zur oberen und zur unteren Erstreckung eines jeden Förderblattes 3 ermöglicht.

Wegen dieses allseitigen Zuflusses müssen nach der Erfindung nicht nur die vorderen Anströmkanten 11, sondern auch die Seitenkanten 12 der Förderblätter 3 so ausgebildet werden, daß die Zuflußrichtung tangential zur Begrenzungsfläche der Förderblätter 3 ist.

Das Fördervolumen wird weiterhin dadurch erhöht, daß jedes Förderblatt 3 an seiner Anströmkante 10 seitlich nach außen über die Befestigungslinie mit der Mantelfläche 2 hinaus vorragt. Die am Rand der Löcher 1 nach innen zur Nabe 4 hin gebogenen Förderblätter 3 bewirken, daß deren Schwerpunkte im Bereich der Nabe 4 liegen, was die statische Festigkeit erhöht.

Die Nabe 4 kann auf die Höhe der Förderblattdicke reduziert werden, was einerseits Erleichterungen bei der Herstellung bringt und andererseits einen selbständigen dynamischen Unwuchtausgleich im Betrieb ergibt.

Ein weiterer Strömungsvorteil wird dadurch erreicht, daß die in den Fig. 2 und 3 auf dem einen Förderblatt 3 eingezeichnete Tangente T - T einen stetig kleiner werdenden Winkel zur Abströmrichtung hat, wenn man diese Tangente T - T von der Anströmkante 10 zur Abströmkante 11 hin mit einem konstanten Abstand von der Drehachse laufen läßt und das Förderblatt 3 relativ dünn ausbildet. Die Abströmrichtung ist dabei als parallel zur Drehachse definiert. Man kann so eine konstante Beschleunigung der geförderten Gas- oder Flüssigkeitsteilchen erreichen, was dem Wirkungsgrad zugutekommt. Bei Propellern, die wegen des auftretenden Biegemomentes Tragflügeldicken haben müssen, ist das nicht möglich. Bei dünnen Förderblättern 3 des Mantelpropellers sind nicht einmal Verstärkungsrippen zur Erhöhung der statischen Festigkeit notwendig.

Vorteilhaft kann eine Anordnung sein, in der die Förderblätter 3 nahe der Drehachse stärker beschleunigen als weiter außen.

Die Zusammenfassung aller Bedingungen für die Förderblätter läuft darauf hinaus, daß die Förderblätter 3 im wesentlichen konkav zur Abströmrichtung ausgebildet werden sollen.

Da das Förderblatt 3 bis zu 180° und mehr um die Drehachse gewunden ist, ergibt sich unter Umständen eine sehr große Steilheit bzw. große Steigung. Die Tangente TT gem. Fig. 2 und 3 kann einen Winkel von weniger als 45° zur Abströmrichtung haben, was größere Abströmgeschwindigkeiten als bei bisher bekannten Propellern ermöglicht. Wegen des "Abreißens" der Strömung mit Turbulenzbildung an der Anströmfläche ist diese große Steigung nämlich bei Propellern nicht möglich. Dieses "Abreißen" der Strömung, das bei starker Turbulenzbildung zu großen Verlusten, zum Rückgang der Förderleistung und außerdem zur Wirbelbildung am Rand der Förderblätter 3 bei seitlicher Zuströmung führt, wird erfindungsgemäß beim hier dargestellten Mantelpropeller durch drei Vorkehrungen an jedem der Förderblätter 3 verhindert:

1. Die Mantelfläche 2 wird an derjenigen Stelle, beginnend, wo Experiment oder Rechnung ohne einen Mantelanschluß ein Abreißen der Strömung ergibt, mit der Innenseite des Förderblattes 3 verbunden.

2. Das Förderblatt 3 und die Mantelfläche 2 gehen mit einem Krümmungsradius von mindestens 1/3 des Förderblattradius ineinander über, wie dies Fig. 4 erkennen läßt.

3. Die experimentell oder rechnerisch gefundene relative Anströmrichtung des zu fördernden Mediums ist allseitig tangential zur Kante des Förderblattes 3.

Durch diese Maßnahmen kann Fördermedium auf der Anströmseite seitlich von der Mantelfläche 2 auf das Förderblatt 3 nachströmen, wenn ansonsten ein zu starker Unterdruck auf dem Förderblatt 3 ein Abreißen der Strömung hervorrufen würde. Außerdem kann von außen zuströmendes Medium keine Wirbelbildung auf der Zuströmseite des Förderblattes 3 hervorrufen.

Das Förderblatt 3 kann am Abströmende vorteilhaft in dieselbe Steigung wie der der Mantelfläche 2 übergehen, also praktisch zum Mantel werden (Fig.4). Im Extremfall kann die Mantelfläche 2 bis zu einem schmalen Streifen zurückgeschnitten werden, der unten an seiner Abströmkante das Förderblatt 3 trägt.

Der Mantelpropeller kann zur Gas- und Flüssigkeitsförderung, als Luftpropeller für Luft-, Wasseroder Landfahrzeuge oder als Antriebspropeller für Wasserfahrzeuge genutzt werden.

Im Umkehrbetrieb, also beim Anströmen von der hier dargestellten Abströmseite her, ist dieser Propeller auch als Flüssigkeits- oder Gasmotor, Wasser- oder Windmotor oder Turbine verwendbar. Das aus den Löchern 1 austretende Medium hat dann etwa die Wirkung wie das Medium, das ein segnerisches Wasserrad verläßt.

## Patentansprüche

1. Mantelpropeller zum Fördern von Gasen, Flüssigkeiten und dergl. und zum Antrieb von Land-, Luft- und Wasserfahrzeugen, bestehend aus mindestens zwei um eine Drehachse schraubenförmig angeordneten Förderblättern (3), die vermittels von in Form von Kegelmantelausschnitten ausgebildete Mantelflächen (2) miteinander verbunden sind, dadurch gekennzeichnet, daß jedes Förderblatt (3) von seiner Anströmseite her mit zunehmender Steigung im Verhältnis zu einer Linie parallel zur Drehachse, ausgebildet ist und daß die Mantelfläche (2) den Bereich der größten mit dem Bereich der geringsten Steigung (Abström- und Anströmbereich) benachbarter Förderblätter (3) miteinander verbinden.

2. Mantelpropeller nach Anspruch 1, dadurch gekennzeichnet, daß die Verbindung von Mantelfläche (2) zum Förderblatt (3) im Bereich der größten Steigung jeweils mit einem Krümmungsradius ausgebildet ist, der mindestens 1/3 des Radius des Förderblattes (3) ist.

3. Mantelpropeller nach einem der Ansprüche 1 oder 2, dadurch gekennzeichnet, daß die Steigung jedes Förderblattes (3) nahe der Drehachse größer, als in größerer Entfernung von der Drehachse ist.

4. Mantelpropeller nach Anspruch 1 bis 3, dadurch gekennzeichnet, daß nicht nur die Tangente an der vorderen Anströmkante (10) mit der relativen Anströmrichtung übereinstimmt, sondern auch die Seitenkanten (12) der Förderblätter (3) so ausgebildet sind, daß die Anströmrichtung tangential zur Seitenkante (1) ausgerichtet ist.

5. Mantelpropeller nach Anspruch 1 bis 5, gekennzeichnet durch Anwendung im Umkehrbetrieb als Hydraulikmotor von Gasen, Flüssigkeiten und dergl., insbesondere als Windmotor.

## Claims

1. A ducted propeller for conveying gases, liquids or the like and for driving land vehicles, aircrafts and watercrafts, consisting of at least too conveyor blades (3) helically disposed around an axis of rotation and interconnected by means of shell surfaces (2) provided in the form of cone-shaped shell sections, characterized in that the pitch of each conveyor blade (3) increases from its leading edge relative to a line parallel to the axis of rotation, and in that the shell surface (2) interconnects the zone of highest pitch with the zone of lowest pitch (leading and trailing zones) of adjacent conveyor blades (3).

2. The ducted propeller of claim 1, characterized in that each connection between shell surface (2) and conveyor blade (3) in the zone of highest pitch has a radius of curvature which is at least 1/3 of the radius of the conveyor blade (3).

3. The ducted propeller of one of claims 1 or 2, characterized in that the pitch of each conveyor blade (3) is higher near the axis of rotation than at a location further remote from the axis of rotation.

4. The ducted propeller of claims 1 to 3, characterized in that not only the tangent at the forward leading edge (10) coincides with the relative approach flow direction, but also the lateral edges (12) of the conveyor blades (3) are so designed that the approach flow direction is oriented tangentially to the lateral edge (1).

5. The ducted propeller of claims 1 to 5, characterized by a use in reverse operation as hydraulic motor of gases, liquids and the like, in particular as wind motor.

**Revendications**

1. Hélice carénée pour refouler des gaz, des liquides ou similaires, et pour entraîner des véhicules terrestres, aériens et aquatiques, constituée d'au moins deux pales (3) de refoulement, disposées en hélice autour d'un axe de rotation, qui sont reliées entre elles par des surfaces de carénage (2) réalisées sous la forme d'éléments de surface de cône, caractérisée en ce que chaque pale (3) de refoulement est, à partir de sa face d'attaque, réalisée avec une inclinaison croissante par rapport à une ligne parallèle à l'axe de rotation, et en ce que les surfaces de carénage (2) relient entre elles la zone de la plus forte inclinaison, avec la zone de la plus faible inclinaison (zone de fuite et zone d'attaque) des pales (3) de refoulement voisines.

2. Hélice carénée suivant la revendication 1, caractérisée en ce que la liaison des surfaces de carénage (2) avec les pales (3) dans la zone de l'inclinaison la plus forte, est, pour chacune, réalisée avec un rayon de courbure qui est au moins le 1/3 du rayon de la pale (3) de refoulement.

3. Hélice carénée suivant la revendication 1 ou la revendication 2, caractérisée en ce que l'inclinaison de chacune des pales (3) de refoulement est, au voisinage de l'axe de rotation, plus grande qu'à une distance plus grande de l'axe de rotation.

4. Hélice carénée suivant l'une quelconque des revendications 1 à 3, caractérisée en ce que non seulement la tangente au bord d'attaque (10), situé à l'avant, coïncide avec la direction apparente de l'arrivée du courant, mais aussi en ce que les arêtes latérales (12) des pales (3) de refoulement sont réalisées de telle façon que la direction de l'arrivée du courant de fluide est dirigée tangentiellement à l'arête latérale.

5. Hélice carénée suivant les revendications 1 à 4, caractérisée par l'emploi en fonctionnement inversé, comme moteur hydraulique à gaz, à liquides ou similaires, en particulier comme éolienne.

Fig. 1
Seitenansicht

Die Abströmflächen sind
schraffiert

Mantelpropeller

Fig. 2
Seitenansicht

Fig. 3
Draufsicht

Fig. 4
Schnitt AB

EP 0 266 802 B1